# EUROPÄISCHE PATENTSCHRIFT

(11) **EP 3 129 891 B1**
(45) Veröffentlichungstag und Bekanntmachung des Hinweises auf die Patenterteilung: **12.12.2018**
(21) Anmeldenummer: 15714484.1
(22) Anmeldetag: 01.04.2015
(51) Int. Cl.: G06F 13/16

(54) **VERFAHREN ZUM VERBESSERTEN ZUGRIFF AUF EINEN HAUPTSPEICHER EINES COMPUTERSYSTEMS, ENTSPRECHENDES COMPUTERSYSTEM SOWIE COMPUTERPROGRAMM-PRODUKT**
METHOD FOR IMPROVED ACCESS TO A MAIN MEMORY OF A COMPUTER SYSTEM, CORRESPONDING COMPUTER SYSTEM AND COMPUTER PROGRAM PRODUCT
PROCÉDÉ D'ACCÈS AMÉLIORÉ À UNE MÉMOIRE PRINCIPALE D'UN SYSTÈME INFORMATIQUE, SYSTÈME INFORMATIQUE CORRESPONDANT AINSI QUE PRODUIT LOGICIEL

(30) Priorität: 08.04.2014 DE 102014104980
(43) Veröffentlichungstag der Anmeldung: 15.02.2017
(73) Patentinhaber: Fujitsu Technology Solutions Intellectual Property GmbH, 80807 München (DE)
(72) Erfinder: WAIZY, Ahmadshah, 33102 Paderborn (DE); LIESEGANG, Ralf, 33102 Paderborn (DE)
(74) Vertreter: Epping - Hermann - Fischer
(86) Internationale Anmeldenummer: PCT/EP2015/057250
(87) Internationale Veröffentlichungsnummer: WO 2015/155103

(56) Entgegenhaltungen:
- WO-A2-2008/131058
- WO-A2-2013/016723
- US-A1- 2007 147 115
- US-A1- 2008 291 727

## Beschreibung

Die Erfindung betrifft ein Verfahren zum verbesserten Zugriff auf einen Hauptspeicher eines Computersystems, ein solches Computersystem sowie ein Computerprogramm-Produkt, welches eingerichtet ist auf einem entsprechenden Computersystem ausgeführt zu werden und bei dessen Ausführung ein entsprechendes Verfahren durchführt.

Seit jeher besteht in der Computertechnologie eine Schwierigkeit darin, dass Computerprogramme bei ihrer Ausführung Zugriff auf Hauptspeicher eines Computersystems beanspruchen, was oftmals zu Speicherknappheit im Hauptspeicher führen kann. Daraus können zum Teil gravierende Zugriffszeitverzögerungen resultieren, welche sich in einer (z.T. gravierenden) Ausdehnung der Zeitdauer für die Prozessabarbeitung innerhalb eines Computersystems äußeren.

Gerade bei dem so genannten In-Memory-Computing, das heißt bei einer reinen Abarbeitung von Programmdaten innerhalb des Hauptspeichers eines Computersystems, äußern sich derartige Zeitverzögerungen zum Beispiel bei Datenbank-Management-Systemen, weil große Teile der Datenbank oder die gesamte Datenbank im Hauptspeicher abgelegt ist. Oftmals übersteigt der Bedarf an Speicherplatz für die Datenbank den physisch zur Verfügung gestellten Speicherplatz deutlich.

Bisherige Ansätze zur Vermeidung von Hauptspeicherknappheit und Zeitverzögerung der obigen Art sehen vor, Programmdaten auf unterschiedliche Speicherhierarchien aufzuteilen. So können Programmdaten beispielsweise aus dem Hauptspeicher in einen Backup-Speicher, beispielsweise auf Festplatte, ausgelagert werden (Swap Storage).
Derartige Ansätze haben den Nachteil, dass kostbarer Speicherplatz im Hauptspeicher dennoch von laufenden Programmen kontinuierlich beansprucht wird, so dass einer Zeitverzögerung beziehungsweise Speicherknappheit im Hauptspeicher nur begrenzt entgegengewirkt werden kann. So entstehen Zeitverzögerungen bei Ausführung von Programmdaten beispielsweise dadurch, dass durch eine übergeordnete Speicher-Management-Einheit Programmdaten zwischen dem Hauptspeicher und einem Backup-Speicher (Swap Storage, Systemplatte oder Festplatte) hin und her geschoben werden müssen.

WO2013/016723, US2008/291727 und WO2008/131058 offenbaren Speicher mit unterschiedlichen Speichertypen.

Die Aufgabe der vorliegenden Erfindung besteht somit darin, den Zugriff auf einen Hauptspeicher eines Computersystems derart zu verbessern, dass eine Hauptspeicherknappheit und Zeitverzögerung von vorneherein minimiert beziehungsweise gänzlich unterbunden werden können, was zu einer schnelleren Abarbeitung von Prozessen in Computersystemen führt.
Diese Aufgabe wird in einem ersten Aspekt durch ein Verfahren nach Anspruch 1 gelöst.
Gemäß diesem Verfahren wird ein Hauptspeicher aus wenigstens einem ersten Speicher gemäß einem ersten Speichertypus und einem zweiten Speicher gemäß einem zweiten Speichertypus bereitgestellt, wobei für einen Zugriff auf den Hauptspeicher eine Auswahlmöglichkeit zwischen dem ersten Speicher und dem zweiten Speicher bereitgestellt wird, und wobei vermittels der Auswahlmöglichkeit in Abhängigkeit vom jeweiligen Zugriffsverhalten des ersten Speichers und des zweiten Speichers zwischen einem Zugriff auf den ersten Speicher und einem Zugriff auf den zweiten Speicher unterschieden wird. Vorteilhaft wird bei dem Verfahren die Auswahlmöglichkeit durch ein laufendes Anwendungsprogramm bereitgestellt.

Der Begriff "Anwendungsprogramm" soll in diesem Kontext verstanden werden als jegliches Anwendungsprogramm, welches in einem Computersystem auf Softwareebene ablaufen kann. Der Begriff umfasst auch lediglich entsprechende Programmteile (so genannte Routinen) eines Anwendungsprogramms.

Der Begriff "Hauptspeicher" soll in diesem Kontext verstanden werden als Kurzzeitspeicher, in den Programme oder Programmteile und die dafür benötigten Programmdaten für und während einer Ausführung innerhalb eines Computersystems geladen werden. Der Hauptspeicher wird oftmals auch als Arbeitsspeicher bezeichnet. Der Hauptspeicher unterscheidet sich somit grundlegend in seiner Speicherhierarchie von weiteren Speicherebenen innerhalb eines Computersystems, wie zum Beispiel Festplattenspeicher oder Bandlaufwerkspeicher, welche im Gegensatz zum Hauptspeicher als Langzeitspeicher zur Datenvorhaltung eingesetzt werden.

Der Begriff "Zugriffsverhalten" beschreibt in diesem Kontext intrinsische Eigenschaften der Speicher des jeweiligen Typus. Das jeweilige Zugriffsverhalten des ersten Speichers und des zweiten Speichers wird beispielsweise wenigstens anhand der folgenden Eigenschaften bestimmt:
- Speicherzugriffszeit,
- Speicherzykluszeit,
- Latenzzeit,
- Datendurchsatz.

Das Verfahren der vorliegenden Art hat den generellen Vorteil gegenüber herkömmlichen Ansätzen, dass je nach Anforderung zwischen unterschiedlichen Speichertypen im Hauptspeicher gewählt werden kann. Der Hauptspeicher kann von einem ersten Speichertypus auf einen zusätzlichen zweiten Speichertypus erweitert beziehungsweise vergrößert werden, wobei eine bessere Auslastung des jeweiligen Speichers in Abhängigkeit von intrinsischen Eigenschaften des jeweiligen Speichers gewährleistet ist. Somit stellt das erläuterte Verfahren eine Kombination aus einer Vergrößerung eines Hauptspeichers in einem Computersystem um einen zweiten Speicher und einer Auswahlmöglichkeit eines Zugriffs auf den jeweiligen Speicher in Abhängigkeit vom entsprechenden Zugriffsverhalten des jeweiligen Speichers bereit. Auf diese Weise wird durch das Verfahren ein Hybrid-Hauptspeicher bereitgestellt.

Vermittels der Auswahlmöglichkeit kann somit im Vorhinein, das heißt vor Beanspruchung des jeweiligen Speichertypus im Hauptspeicher, unterschieden werden, welcher Speichertypus des Hauptspeichers für einen entsprechenden Prozess geeignet beziehungsweise frei ist. Auf diese Weise wird verhindert, dass ein herkömmlicher Hauptspeicher zunächst vollständig mit Daten belegt wird, regelrecht vollgestopft wird, und erst im Nachhinein beispielsweise durch eine Speicher-Management-Einheit entschieden wird, welche Daten für einen häufigen Zugriff im Hauptspeicher belassen werden und welche Daten in eine Auslagerungsdatei auf einen Backup-Speicher (Swap Storage, Systemplatte oder Festplatte) ausgelagert werden.

Das Verfahren der erläuterten Art verbessert somit den Zugriff (Hauptspeichervergrößerung, Zugriffszeitminimierung) auf einen Hauptspeicher eines Computersystems, indem Ressourcen des Hauptspeichers in mehrere Speicher unterschiedlichen Speichertyps aufgesplittet und vorbereitet werden, wobei vor Belegung eines entsprechenden Speichers durch die Auswahlmöglichkeit ein Zugriff auf den entsprechenden Speicher unterschieden wird.

Aufgrund der durch ein laufendes Anwendungsprogramm bereitgestellten Auswahlmöglichkeit kann ein laufendes Anwendungsprogramm selbst zwischen den durch den Hauptspeicher bereitgestellten Speichertypen auswählen und den für jeweilige Daten bzw. Datentypen jeweils geeigneten Speicher des Hauptspeichers ansprechen.

Bevorzugt sind bei dem erläuterten Verfahren im Anwendungsprogramm wenigstens zwei Programm-Schnittstellen vorgesehen. Über eine erste Programm-Schnittstelle wird der erste Speicher angesprochen, während über eine zweite Programm-Schnittstelle der zweite Speicher angesprochen wird. Somit kann ein laufendes Anwendungsprogramm vermittels der unterschiedlichen Schnittstellen zum Beispiel für unterschiedliche Zugriffshäufigkeiten auf jeweilige Programmdaten unterschiedliche Speicher des Hauptspeichers auswählen, allokieren und ansprechen. Dazu können beispielsweise unterschiedliche Programm-Routinen aufgerufen werden.

Bevorzugt werden bei dem Verfahren der erläuterten Art Programmdaten des im Computersystem laufenden Anwendungsprogramms vermittels der Auswahlmöglichkeit in Abhängigkeit vom jeweiligen Zugriffsverhalten des ersten Speichers und des zweiten Speichers und/oder in Abhängigkeit von der Zugriffshäufigkeit auf die jeweiligen Programmdaten entweder im ersten Speicher oder im zweiten Speicher abgelegt. Eine derartige Maßnahme hat den Vorteil, dass zwischen der Zugriffshäufigkeit jeweiliger Programmdaten unterschieden werden kann.

Programmdaten mit einer hohen Zugriffshäufigkeit werden als sogenannte "hot data" bezeichnet, während Programmdaten mit einer mittleren Zugriffshäufigkeit als "warm Data" und Programmdaten mit einer niedrigen Zugriffshäufigkeit als "cold Data" bezeichnet werden. Eine Unterscheidung des Speicherzugriffs in Abhängigkeit vom oben erläuterten Zugriffsverhalten des jeweiligen ersten oder zweiten Speichers und/oder in Abhängigkeit von der Zugriffshäufigkeit auf die jeweiligen Programmdaten ermöglicht eine verbesserte Ausnutzung verschiedener Speichertypen, die für verschiedene Zugriffshäufigkeiten auf Programmdaten geeignet beziehungsweise ausgelegt sind.

Beispielsweise ist ein Speicher mit einer niedrigen Speicherzugriffszeit geeignet für einen häufigen Speicherzugriff, während ein Speicher mit einer längeren Speicherzugriffszeit vielmehr für Zugriffe von niedrigerer Häufigkeit geeignet ist. Beispielsweise können in einem Datenbank-Management-System Transaktionsdaten, auf die häufig zugegriffen wird (hot data), in einem Speicher des Hauptspeichers mit einem schnellen Speicherzugriff abgelegt werden, während Daten für einen gewöhnlichen Tabellenbeziehungsweise Verzeichniszugriff, auf die weniger häufig zugegriffen wird (warm data), in einem Speicher des Hauptspeichers mit einer höheren Speicherzugriffszeit abgelegt werden.

Durch die Unterscheidung wird ein für eine spezifische Zugriffshäufigkeit weniger geeigneter Speicher nicht unnötig belegt, sondern vorab durch ein laufendes Anwendungsprogramm eine Auswahl des geeigneteren Speichers vermittels des erläuterten Verfahrens getroffen.

Eine Ermittlung des Zugriffsverhaltens des ersten Speichers und des zweiten Speichers bzw. eine Ermittlung der Zugriffshäufigkeit auf die jeweiligen Programmdaten kann vermittels eines speziellen Algorithmus im laufenden Anwendungsprogramm statisch und/oder dynamisch durchgeführt werden. Beispielsweise können dem Anwendungsprogramm durch ein Betriebssystem, ggf. iterativ, bestimmte Parameter und/oder Variablenwerte übergeben werden, die ein Zugriffsverhalten des ersten Speichers und des zweiten Speichers widerspiegeln und im Programm entsprechende Berücksichtigung für eine Auswahl des geeigneten Speichers finden. Ferner kann für eine derartige Auswahl auch eine Zugriffshäufigkeit auf die jeweiligen Programmdaten anhand eines Betriebsverhaltens des Anwendungsprogramms, des Betriebssystems und/oder sonstiger Komponenten des Computersystems, unter Umständen iterativ, ermittelt werden. Vorteilhaft laufen die Prozesse zur Ermittlung dieser Informationen automatisiert im Anwendungsprogramm ab. Aufgrund der gesammelten Informationen kann dann eine Entscheidung über die Auswahl des geeigneten Speichers im Anwendungsprogramm getroffen werden.

Vorteilhaft wird bei dem Verfahren der erläuterten Art der erste Speicher als flüchtiger Speichertypus bereitgestellt und der zweite Speicher als nicht flüchtiger Speichertypus bereitgestellt. Beispielsweise ist der erste Speicher vom Typus DRAM (Dynamic Random Access Memory), während der zweite Speicher vom Speichertypus NVRAM (Non-Volatile Random-Access Memory) ist. Alternativ ist denkbar, auch den zweiten Speicher als flüchtigen Speichertypus, z.B. DRAM, bereitzustellen.

Beispielsweise kann der zweite Speicher, im Falle eines nicht flüchtigen Speichers vom Typus NVRAM, als SSD-Speicher (Solid-State-Drive) eingerichtet sein. Andere Speichertypen sind ebenfalls denkbar und nicht durch das vorliegende Verfahren ausgeschlossen. Der zweite Speicher kann als lokales Speichermedium innerhalb des Computersystems oder entfernt (Remote) über Netzwerk eingebunden sein.

Ein Vorteil der Einrichtung des ersten und zweiten Speichers gemäß der erläuterten Art besteht in der Kombination von Speichertypen mit unterschiedlichen Zugriffs-/Speichereigenschaften (flüchtig/nicht flüchtig, Zugriffszeiten, Kosten, und so weiter). So können Daten, die im Hauptspeicher abzulegen sind, in Abhängigkeit von ihren entsprechenden Eigenschaften (zum Beispiel hot/warm/cold data) und in Abhängigkeit vom jeweiligen Zugriffsverhalten des ersten beziehungsweise zweiten Speichers entweder in einem flüchtigen oder in einem nicht flüchtigen Speicherbereich des Hauptspeichers abgelegt werden. Dies kann zum Beispiel in Abhängigkeit von entsprechenden Zugriffszeiten, Auslastung, Bereitstellung im Hinblick auf Speicherkosten, und so weiter erfolgen. Auch in diesem Aspekt werden somit Stärken des beschriebenen Hybrid-Hauptspeichers in Verbindung mit dem erläuterten Verfahren augenscheinlich.

Alternativ oder ergänzend zu den erläuterten Speichertypen kann wenigstens ein Speicher (zum Beispiel der zweite Speicher anstelle des Typus NVRAM/SSD) auch gemäß dem zukünftig eingesetzten so genannten "Storage Class Memory"-Typus (SCM) eingerichtet werden. SCM-Speicher erlauben eine Kombination von Vorzügen klassischer Kurzzeit(-Haupt)speicher mit den Vorzügen klassischer Langzeitspeicher.

Vorzugsweise erfolgt bei dem erläuterten Verfahren ein Zugriff auf den Hauptspeicher Byte- oder Wort-weise. Auf diese Weise kann ein Vorteil einer raschen Schreib-/Lese-Zugriffszeit mit den weiteren Vorteilen des erläuterten Verfahrens kombiniert werden.

In einem weiteren Aspekt wird die obige Aufgabe durch ein Computersystem gelöst, umfassend einen Hauptspeicher, wobei der Hauptspeicher wenigstens einen ersten Speicher gemäß einem ersten Speichertypus und einen zweiten Speicher gemäß einem zweiten Speichertypus aufweist, wobei für einen Zugriff auf den Hauptspeicher eine Auswahlmöglichkeit zwischen dem ersten Speicher und dem zweiten Speicher eingerichtet ist derart, dass vermittels der Auswahlmöglichkeit ein Zugriff auf den ersten Speicher und ein Zugriff auf den zweiten Speicher in Abhängigkeit vom jeweiligen Zugriffsverhalten des ersten Speichers und des zweiten Speichers unterscheidbar sind, und wobei die Auswahlmöglichkeit in einem Anwendungsprogramm implementiert ist.

Bei einem derartigen Computersystem ist der Hauptspeicher neben einem Speicher gemäß einem ersten Speichertypus um einen Speicher gemäß einem zweiten Speichertypus erweitert beziehungsweise vergrößert. Vermittels der in einem Anwendungsprogramm eingerichteten bzw. implementierten Auswahlmöglichkeit ist eine Funktionalität bereitgestellt, um je nach Anforderung zwischen unterschiedlichen Speichertypen im Hauptspeicher zu wählen. Auf diese Weise ist eine bessere Auslastung des Hauptspeichers in Abhängigkeit von intrinsischen Eigenschaften des jeweiligen Speichers gewährleistet.

Sämtliche Maßnahmen und Verfahrensschritte des oben erläuterten Verfahrens sowie deren Vorteile und vorteilhafte Aspekte sind auch auf ein Computersystem der erläuterten Art anwendbar und umgekehrt. Das bedeutet, dass das Computersystem vorteilhaft dazu eingerichtet ist, ein Verfahren der oben erläuterten Art mit sämtlichen Vorteilen beziehungsweise vorteilhaften Aspekten und Verfahrensschritten beziehungsweise Maßnahmen bereitzustellen und durchzuführen.

Gemäß einem weiteren Aspekt wird ein Computerprogramm-Produkt vorgeschlagen, welches eingerichtet ist auf einem Computersystem ausgeführt zu werden und bei dessen Ausführung ein Verfahren der erläuterten Art durchführt.

Weitere vorteilhafte Ausgestaltungen des erläuterten Verfahrens sowie des erläuterten Computersystems sind in den Unteransprüchen offenbart. Die Erfindung wird anhand mehrerer Zeichnungen im Weiteren näher erläutert.

Es zeigen:
Figur 1 eine schematisierte Darstellung mehrerer Hierarchien in einem Computersystem,
Figur 2A eine schematisierte Darstellung einer ersten Ausführung einer erfindungsgemäßen Speicherarchitektur,
Figur 2B eine schematisierte Darstellung einer zweiten Ausführung einer erfindungsgemäßen Speicherarchitektur und
Figur 2C eine schematisierte Darstellung mehrerer Hierarchien in einem Computersystem zur Durchführung eines erfindungsgemäßen Verfahrens.

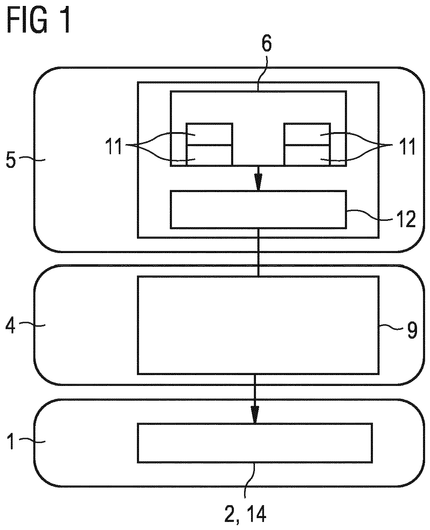

Figur 1 zeigt eine schematisierte Darstellung mehrerer Hierarchien innerhalb einer Computersystem-Architektur. Die Architektur umfasst einen Hauptspeicher 1, eine Betriebssystemebene 4 sowie eine Benutzerebene 5.

Der Hauptspeicher 1 umfasst einen Speicher 14 gemäß einem ersten Speichertypus 2, welcher beispielsweise als DRAM-Speicher ausgeführt ist. Der Hauptspeicher 1 dient als Arbeitsspeicher zur Verarbeitung von Programm- sowie sonstigen Prozessdaten innerhalb des Computersystems. Somit unterscheidet sich der Hauptspeicher 1 grundsätzlich von einem Langzeitspeicher, wie zum Beispiel Festplatten oder Bandlaufwerke, welche zur Langzeitdatenspeicherung in Computersystemen eingesetzt werden, jedoch der Einfachheit halber in Figur 1 nicht dargestellt sind.

Die Betriebssystemebene 4 umfasst eine Betriebssystemumgebung, welche die Basisfunktionalität des Computersystems steuert und auf den Hauptspeicher 1 zugreifen kann. Insbesondere weist die Betriebssystemebene 4 eine Speicherverwaltungseinheit beziehungsweise Speicher-Management-Einheit 9 auf, die auf den Hauptspeicher 1 zugreifen kann, um beispielsweise Daten in den Hauptspeicher 1 zu schreiben oder aus dem Hauptspeicher 1 auszulesen oder einen Speicherbereich des Hauptspeichers 1 vorbestimmten Programmen im Computersystem für einen Speicherzugriff zuzuweisen (so genannte Speicherallokation). Die Betriebssystemebene 4 kann rein software-basiert aufgebaut sein oder eine Kombination aus Software- und Hardware-Bausteinen umfassen. Beispielsweise kann die Betriebssystemebene 4 eine Betriebssystem-Software aufweisen. Die Speicherverwaltungseinheit 9 kann software-basiert oder entsprechend gemischt aus Hardware und Software aufgebaut sein.

Auf einer Benutzerebene 5, welche in Figur 1 hierarchisch als oberste Ebene dargestellt ist, findet sich ein Programm 6, welches als laufendes Programm Programmdaten verarbeitet und als Anwendungsprogramm vorbestimmte Anwendungen realisiert. Hierzu liegen im Programm 6 Programmdaten 11 vor beziehungsweise werden im Programm 6 Programmdaten 11 während des Ablaufs erzeugt, welche über eine Programmschnittstelle 12 vermittels der Speicherverwaltungseinheit 9 der Betriebssystemebene 4 an den Hauptspeicher 1, konkret den ersten Speicher 14 gemäß dem ersten Speichertypus 2, übergeben werden können.

Vermittels der Programmschnittstelle 12 kann das Programm 6 somit beispielsweise über die Speicherverwaltungseinheit 9 einen bestimmten Speicherbereich im Hauptspeicher 1 zur Ablage von Programmdaten 11 ausnutzen, wobei der entsprechende Speicherbereich zuvor entweder über das Programm 6 selbst oder über die Speicherverwaltungseinheit 9 der Betriebssystemebene 4 reserviert (allokiert) wurde.

Bei der Architektur gemäß Figur 1 ist somit ein Programm 6 (oder mehrere laufende Programme 6, welche der Einfachheit halber in Figur 1 nicht dargestellt sind) grundsätzlich bestrebt, möglichst viel Speicher im Hauptspeicher 1 für sich ausnutzen zu können. Dabei kann es vorkommen, dass in einem Betrieb des Computersystems nahezu jeglicher Speicher des Hauptspeichers 1 mit entsprechenden Programmdaten 11 belegt ist, so dass es zu einer Knappheit an Speicherressourcen im Hauptspeicher 1 kommt. Andere Programme, welche ebenfalls auf die Speicherressourcen des Hauptspeichers 1 zugreifen wollen, sind dann entweder blockiert oder können Speicher des Hauptspeichers 1 erst ausnutzen, wenn andere Daten aus dem Hauptspeicher 1 entfernt wurden (zum Beispiel durch Auslagerung in eine spezielle Partition beziehungsweise einen Backup-Speicher, so genannter Swap-Speicher).

Bei einer Architektur gemäß Figur 1 kann es somit zu Zugriffszeitverzögerungen und Speicherknappheit auf dem Hauptspeicher 1 kommen, was sich in einer schlechten Performance des Computersystems niederschlägt.

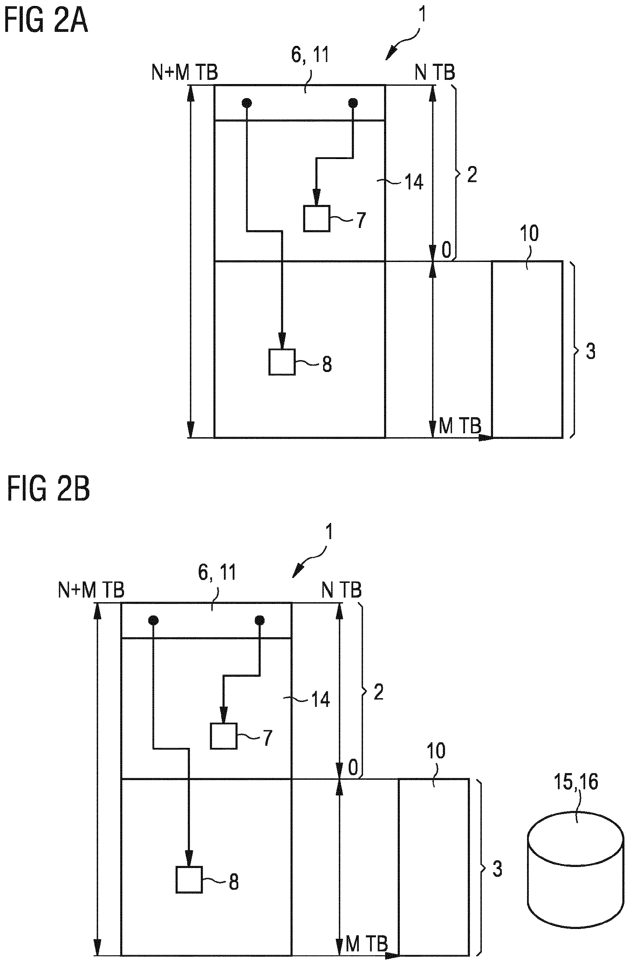

Zur Lösung derartiger Nachteile ist gemäß einer schematisierten ersten Ausführung eines Hauptspeichers 1 gemäß Figur 2A vorgeschlagen, den Hauptspeicher 1 neben einem Speicher 14 gemäß einem ersten Speichertypus 2 um einen zweiten Speicher 10 gemäß einem zweiten Speichertypus 3 zu erweitern und zu vergrößern. Das bedeutet, dass der Hauptspeicher 1 gemäß Figur 2A um einen erweiterten Speicher 10 gegenüber dem Hauptspeicher 1 gemäß einer Architektur aus Figur 1 ergänzt ist, so dass ein Programm 6 beziehungsweise Programmdaten 11 eines laufenden Programms 6 sowohl auf den ersten Speicher 14 gemäß dem ersten Speichertypus 2 als auch auf den zweiten, erweiterten Speicher 10 gemäß einem zweiten Speichertypus 3 zugreifen können.

Im Programm 6 ist hierzu eine Auswahlmöglichkeit implementiert, um Programmdaten 11 eines ersten Datentypus 7 im Speicher 14 gemäß dem ersten Speichertypus 2 abzulegen beziehungsweise Programmdaten 11 gemäß einem zweiten Datentypus 8 im zweiten Speicher 10 gemäß dem zweiten Speichertypus 3 abzulegen. Ein Programm 6 kann vermittels der Auswahlmöglichkeit somit vorab entscheiden, auf welchen Speicher 2, 14 beziehungsweise 3, 10 des Hauptspeichers 1 es zugreifen möchte. Insbesondere erfolgt eine Auswahl in Abhängigkeit von Zugriffseigenschaften der Speicher 10, 14 gemäß dem ersten Speichertypus 2 und gemäß zweiten Speichertypus 3. Derartige Zugriffseigenschaften bestimmten sich vorteilhaft aus der Speicherzugriffszeit, der Speicherzykluszeit, einer Latenzzeit oder durch den Datendurchsatz. Weitere intrinsische Eigenschaften der Speicher 2 und 3 können gleichfalls herangezogen werden.

Beispielsweise können Programmdaten 11 gemäß dem ersten Datentypus 7 Daten mit einer hohen Zugriffshäufigkeit (so genannte hot data) umfassen, wobei vorteilhaft der erste Speicher 14 gemäß dem ersten Speichertypus 2 als schneller Speicher mit einer kurzen Zugriffszeit ausgeführt ist.

Programmdaten 11 gemäß dem zweiten Datentypus 8 können beispielsweise Programmdaten mit einer geringeren Zugriffshäufigkeit (warm data) sein, welche vermittels des Programms 6 vorteilhaft im erweiterten Speicher 10 gemäß dem zweiten Speichertypus 3 abgelegt werden. Der erweiterte Speicher 10 kann somit im Vergleich zum ersten Speicher 14 ein langsamerer Speicher mit einer längeren Zugriffszeit sein.

Auf diese Weise kann ein Programm 6 in Abhängigkeit von Zugriffseigenschaften der jeweiligen Speicher 2, 14 und 3, 10 beziehungsweise in Abhängigkeit von Datentypen 7 und 8 der Programmdaten 11 (beispielsweise in Abhängigkeit von der Zugriffshäufigkeit auf Programmdaten 11) entscheiden, welcher der unterschiedlichen Speichertypen 2, 14 und 3, 10 des Hauptspeichers 1 beansprucht werden soll. Dies ermöglicht einem Programm 6 eine Vorabauswahl geeigneter Speichertypen für geeignete Datentypen der Programmdaten 11, so dass ein jeweiliger Speicher gemäß einem jeweiligen Speichertypus 2 und 3 des Hauptspeichers 1 nicht unnötig mit Programmdaten 11 belegt wird, welche an anderer Stelle, das heißt in einem Speicherbereich eines anderen Speichertypus des Hauptspeichers 1, geeigneter abgelegt sein können. Auf diese Weise ist nicht nur eine Erweiterung oder Vergrößerung des Hauptspeichers 1 möglich, sondern auch eine bessere Auslastung in Abhängigkeit von intrinsischen Eigenschaften des jeweiligen Speichers gemäß dem jeweiligen Speichertypus 2 oder 3.

Gemäß Figur 2A können somit zwei unterschiedliche Speicher 10, 14 für unterschiedliche Datentypen 7, 8 unterschieden werden. Ein schneller Speicher 14 mit kurzer Zugriffszeit für einen ersten Datentypus 7 und ein im Vergleich dazu langsamerer Speicher 10 mit längerer Zugriffszeit für einen zweiten Datentypus 8. Auf diese Weise ist ein Hybrid-Hauptspeicher 1 geschaffen.

Beispielsweise kann der erste Speicher 14 gemäß dem ersten Speichertypus 2 als DRAM-Speicher ausgeführt sein, während der erweiterte Speicher 10 gemäß dem zweiten Speichertypus 3 als nicht flüchtiger Speicher, zum Beispiel als NVRAM-Speicher, ausgeführt ist. Der NVRAM-Speicher kann beispielsweise als Solid-State Speicher (SSD) ausgeführt sein. Dabei ist denkbar, den SSD-Speicher lokal im Computersystem zu implementieren oder entfernt auf einem über Netzwerk erreichbaren Computersystem zu implementieren, so dass auf diesen Speicher über Netzwerk (Remote) zugegriffen werden kann. Alternativ oder ergänzend ist auch denkbar, in umgekehrter Weise auf den lokalen Hauptspeicher 1 von einem oder mehreren entfernten Servern aus zuzugreifen (Remote Zugriff).

Es ist auch denkbar, einen Speicher gemäß einem Speichertypus nach dem so genannten Storage Class Memory (SCM) vorzusehen.

Gemäß Figur 2A weist der erste Speicher 14 gemäß dem ersten Speichertypus 2 eine Größe von N Terabyte auf, während der erweiterte Speicher 10 gemäß dem zweiten Speichertypus 3 eine Größe von M Terabyte aufweist. Insgesamt umfasst daher der Hauptspeicher 1 eine für ein Programm 6 sichtbare Größe von N + M Terabyte. Dies ist schematisiert in Figur 2A dargestellt. Der Hauptspeicher 1 ist somit als Hybrid-Hauptspeicher eingerichtet.

Die Architektur gemäß 2A bietet u.a. zwei Vorteile. Ein erster Vorteil ist dadurch gegeben, dass ein Hauptspeicher 1 von einem ersten Speicher 14 gemäß einem ersten Speichertypus 2 mit N Terabyte um M Terabyte eines erweiterten Speichers 10 gemäß einem zweiten Speichertypus 3 auf einen Gesamtspeicher von N + M Terabyte erweitert und vergrößert werden kann. Der zweite Vorteil besteht darin, dass zusätzlich ein Programm eine Auswahlmöglichkeit hat, um Daten in Abhängigkeit vom Datentypus und in Abhängigkeit von den intrinsischen Zugriffseigenschaften der jeweiligen Speicher entweder im ersten Speicher 14 oder im zweiten Speicher 10 abzulegen.

Figur 2B zeigt eine schematisierte Darstellung einer zweiten denkbaren Ausführung einer Speicherarchitektur. Dabei ist der Hauptspeicher 1 in der in Figur 2A gezeigten Weise aufgebaut. Allerdings ist im Unterschied zur Architektur aus Figur 2A in Figur 2B zusätzlich ein Festplattenspeicher 15 vorgesehen, auf dem Programmdaten gemäß einem dritten Datentypus 16, z.B. mit einer im Vergleich zu den obigen Datentypen 7 und 8 niedrigeren Zugriffshäufigkeit (cold data) abgelegt werden können. Der Festplattenspeicher 15 weist eine im Vergleich zu den Speichern 2, 14 und 3, 10 längere Zugriffszeit auf. Ein Programm 6 kann vorteilhaft auf den Festplattenspeicher 15 ebenfalls zugreifen, was der Einfachheit halber jedoch nicht dargestellt ist.

Gemäß Figur 2B können somit drei unterschiedliche Speicher 10, 14, 15 für unterschiedliche Datentypen 7, 8, 16 unterschieden werden. Ein schneller Speicher 14 mit kurzer Zugriffszeit für einen ersten Datentypus 7, ein mittelschneller Speicher 10 mit mittlerer Zugriffszeit für einen zweiten Datentypus 8, sowie ein langsamer Speicher 15 mit langer Zugriffszeit für einen dritten Datentypus 16. Die Speicher 10 und 14 sind dabei als Hybrid-Hauptspeicher 1 (wie auch in Figur 2A) zusammengefasst.

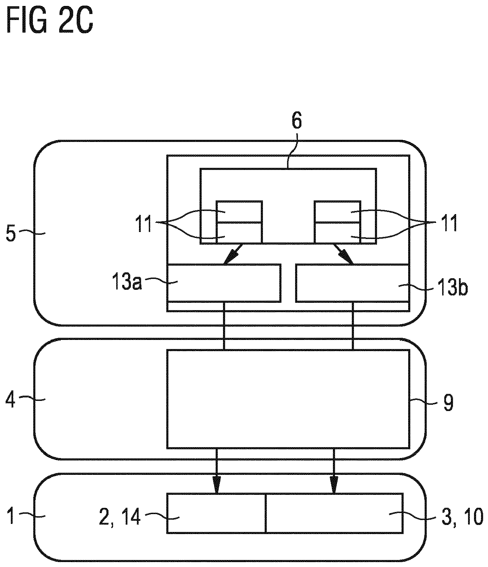

Figur 2C zeigt eine schematisierte Darstellung einer erfindungsgemäßen Architektur in einem Computersystem, wobei, ähnlich wie in Figur 1, ein Hauptspeicher 1, eine Betriebssystemebene 4 sowie eine Benutzerebene 5 eingerichtet ist.

Der Hauptspeicher 1 weist gemäß den Architekturen aus Figur 2A und 2B einen ersten Speicher 14 gemäß einem ersten Speichertypus 2 und einen zweiten, erweiterten Speicher 10 gemäß einem zweiten Speichertypus 3 auf.

Wie bereits im Zusammenhang mit Figur 1 erläutert, ist auf Benutzerebene 5 ein laufendes Anwendungsprogramm 6 vorgesehen, welches vermittels der Betriebssystemebene 4, insbesondere vermittels einer Speicherverwaltungseinheit 9 auf Betriebssystemebene 4, auf den Hauptspeicher 1, konkret entweder auf den ersten Speicher 14 gemäß dem ersten Speichertypus 2 oder auf den erweiterten Speicher 10 gemäß dem zweiten Speichertypus 3, zugreifen kann.

Für einen entsprechenden Zugriff und als Auswahlmöglichkeit für das Programm 6 sind im Programm 6 zwei Programmschnittstellen, eine erste Schnittstelle 13a und eine zweite Schnittstelle 13b, eingerichtet. Beispielsweise kann das Programm 6 über die erste Programmschnittstelle 13a den ersten Speicher 14 gemäß dem ersten Speichertypus 2 ansprechen, während das Programm 6 über die Programmschnittstelle 13b den erweiterten Speicher 10 gemäß dem zweiten Speichertypus 3 im Hauptspeicher 1 ansprechen kann. Die Programmschnittstellen 13a und 13b können neben Speicherbefehlen auch Programminterfaces zum Allokieren bzw. Anweisen eines Allokierens eines jeweiligen Speichers umfassen. Beispielsweise kann die Programmschnittstelle 13a eine Routine "m1alloc()" sein während die Programmschnittstelle 13b eine Routine "m2alloc()" umfasst. Auf diese Weise können unterschiedliche Speicher 14, 10 eines ersten und zweiten Typus 2, 3 durch unterschiedliche Allokierungsbefehle für einen entsprechenden Zugriff zum Ablegen unterschiedlicher Datentypen angesprochen werden.

Wie bereits zu Figur 2A erläutert, kann das Programm 6 gemäß Figur 2C vermittels der Programmschnittstellen 13a und 13b und gegebenenfalls vermittels der Speicherverwaltungseinheit 9 Programmdaten 11 in Abhängigkeit von ihrer Zugriffshäufigkeit und/oder in Abhängigkeit vom Zugriffsverhalten der jeweiligen Speicher entweder im ersten Speicher 14 gemäß dem ersten Speichertypus 2 oder im erweiterten Speicher 10 gemäß dem zweiten Speichertypus 3 ablegen. Dies erfolgt analog zu den Erläuterungen gemäß Figur 2A.

Daneben ist auch denkbar, Programmdaten 11 in einem Festplattenspeicher 15 gemäß Figur 2B abzulegen. Dies ist der Einfachheit halber jedoch nicht dargestellt.

Durch einen im Programm 6 vorteilhaft implementiereten Algorithmus, welcher automatisiert abläuft, kann das Programm 6 Informationen über das Zugriffsverhalten der unterschiedlichen Speicher 14, 10 und ggf. 15 erfassen und/oder Informationen über die Zugriffshäufigkeit auf die jeweiligen Programmdaten 11 erfassen. Dies kann statisch oder dynamisch erfolgen. Aufgrund der gesammelten Informationen kann dann eine Entscheidung über die Auswahl des geeigneten Speichers im Anwendungsprogramm getroffen werden.

Die Zeichnungen gemäß den Figuren 1, 2A, 2B und 2C stellen lediglich beispielhafte Ausführungen möglicher Architekturen des erläuterten Computersystems oder möglicher Abläufe des erläuterten Verfahrens dar.

### Bezugszeichenliste

- 1: Hauptspeicher
- 2: erster Speichertypus
- 3: zweiter Speichertypus
- 4: Betriebssystemebene
- 5: Benutzerebene
- 6: Programm
- 7: Daten gemäß einem ersten Datentypus
- 8: Daten gemäß einem zweiten Datentypus
- 9: Speicherverwaltungseinheit
- 10: erweiterter zweiter Speicher
- 11: Programmdaten
- 12: Programmschnittstelle
- 13a, 13b: Programmschnittstelle
- 14: erster Speicher
- 15: Festplattenspeicher
- 16: Daten gemäß einem dritten Datentypus

## Patentansprüche

1. Verfahren zum verbesserten Zugriff auf einen Hauptspeicher (1) eines Computersystems,
- wobei ein Hauptspeicher (1) aus wenigstens einem ersten Speicher (14) gemäß einem ersten Speichertypus (2) und einem zweiten Speicher (10) gemäß einem zweiten Speichertypus (3) bereitgestellt wird, und
- wobei für einen Zugriff auf den Hauptspeicher (1) eine Auswahlmöglichkeit zwischen dem ersten Speicher (14) und dem zweiten Speicher (10) bereitgestellt wird, und
- wobei vermittels der Auswahlmöglichkeit in Abhängigkeit vom jeweiligen Zugriffsverhalten des ersten Speichers (14) und des zweiten Speichers (10) zwischen einem Zugriff auf den ersten Speicher (14) und einem Zugriff auf den zweiten Speicher (10) unterschieden wird, **dadurch gekennzeichnet dass**
- die Auswahlmöglichkeit in einem laufenden Anwendungsprogramm (6) auf einer Benutzerebene (5) innerhalb einer Computersystem-Architektur implementiert ist und sich die Benutzerebene (5) von einer Betriebssystemebene (4) der Computersystem-Architektur unterscheidet, und
- wobei das Anwendungsprogramm (6) vermittels der Auswahlmöglichkeit vorab entscheidet, auf welchen Speicher (10, 14) des Hauptspeichers (1) es zugreifen möchte.

2. Verfahren nach Anspruch 1, wobei im Anwendungsprogramm (6) wenigstens zwei Programm-Schnittstellen (13a, 13b) vorgesehen sind und über die erste Programm-Schnittstelle (13a) der erste Speicher (14) angesprochen wird und über die zweite Programm-Schnittstelle (13b) der zweite Speicher (10) angesprochen wird.

3. Verfahren nach Anspruch 1 oder 2, wobei Programmdaten (11) des im Computersystem laufenden Anwendungsprogramms (6) vermittels der Auswahlmöglichkeit in Abhängigkeit vom jeweiligen Zugriffsverhalten des ersten Speichers (14) und des zweiten Speichers (10) und/oder in Abhängigkeit von der Zugriffshäufigkeit auf die jeweiligen Programmdaten (11) entweder im ersten Speicher (14) oder im zweiten Speicher (10) abgelegt werden.

4. Verfahren nach einem der Ansprüche 1 bis 3, wobei das jeweilige Zugriffsverhalten des ersten Speichers (14) und des zweiten Speichers (10) wenigstens anhand der folgenden Eigenschaften bestimmt wird:
- Speicherzugriffszeit,
- Speicherzykluszeit,
- Latenzzeit,
- Datendurchsatz.

5. Verfahren nach einem der Ansprüche 1 bis 4, wobei der erste Speicher (14) als flüchtiger Speichertypus bereitgestellt wird und der zweite Speicher (10) als flüchtiger oder nichtflüchtiger Speichertypus bereitgestellt wird.

6. Verfahren nach einem der Ansprüche 1 bis 5, wobei der zweite Speicher (10) als entfernter Speicher über Netzwerk von einem oder mehreren entfernten Computersystemen bereitgestellt wird.

7. Verfahren nach einem der Ansprüche 1 bis 6, wobei ein Zugriff auf den Hauptspeicher (1) Byte- oder Wort-weise erfolgt.

8. Computersystem umfassend einen Hauptspeicher (1), wobei der Hauptspeicher (1) wenigstens einen ersten Speicher (14) gemäß einem ersten Speichertypus (2) und einen zweiten Speicher (10) gemäß einem zweiten Speichertypus (3) aufweist, wobei für einen Zugriff auf den Hauptspeicher (1) eine Auswahlmöglichkeit zwischen dem ersten Speicher (14) und dem zweiten Speicher (10) eingerichtet ist derart, dass vermittels der Auswahlmöglichkeit ein Zugriff auf den ersten Speicher (14) und ein Zugriff auf den zweiten Speicher (10) in Abhängigkeit vom jeweiligen Zugriffsverhalten des ersten Speichers (14) und des zweiten Speichers (10) unterscheidbar sind, **dadurch gekennzeichnet dass**
die Auswahlmöglichkeit in einem Anwendungsprogramm (6) auf einer Benutzerebene (5) innerhalb einer Computersystem-Architektur implementiert ist und sich die Benutzerebene (5) von einer Betriebssystemebene (4) der Computersystem-Architektur unterscheidet, und
wobei das Anwendungsprogramm (6) eingerichtet ist, vermittels der Auswahlmöglichkeit vorab zu entscheiden, auf welchen Speicher (10, 14) des Hauptspeichers (1) es zugreifen möchte.

9. Computersystem nach Anspruch 8, wobei im Anwendungsprogramm (6) wenigstens zwei Programm-Schnittstellen (13a, 13b) zum Zugriff auf den Hauptspeicher (1) implementiert sind und über die erste Programm-Schnittstelle (13a) der erste Speicher (14) ansprechbar ist und über die zweite Programm-Schnittstelle (13b) der zweite Speicher (10) ansprechbar ist.

10. Computersystem nach Anspruch 8 oder 9, welches eingerichtet ist, ein Verfahren nach einem der Ansprüche 1 bis 7 durchzuführen.

11. Computerprogramm-Produkt, welches eingerichtet ist auf einem Computersystem ausgeführt zu werden und bei dessen Ausführung ein Verfahren nach einem der Ansprüche 1 bis 7 durchführt.

## Claims

1. Method for improved access to a main memory (1) of a computer system,
- wherein a main memory (1) comprising a first memory (14) according to a first memory type (2) and a second memory (10) according to a second memory type (3) is provided, and
- wherein, for an access to the main memory (1), a choice between the first memory (14) and the second memory (10) is provided, and
- wherein access to the first memory (14) and access to the second memory (10) is distinguished by means of the choice depending upon the respective access behavior of the first memory (14) and the second memory (10), **characterized in that**
- the choice is implemented in a running application program (6) at a user level (5) within a computer system architecture, and the user level (5) is different from an operating system level (4) of the computer system architecture, and
- wherein the application program (6), by means of the choice, decides in advance, which memory (10, 14) of the main memory (11) it would like to access.

2. Method according to claim 1, wherein, in the application program (6), at least two program interfaces (13a, 13b) are provided, and, via the first program interface (13a), the first memory (14) is addressed, and, via the second program interface (13b), the second memory (10) is addressed.

3. Method according to claim 1 or 2, wherein program data (11) of the application program (6) running in the computer system are stored either in the first memory (14) or in the second memory (10), by means of the choice, depending upon the respective access behavior of the first memory (14) and the second memory (10), and/or depending upon the access frequency of the respective program data (11).

4. Method according to one of claims 1 to 3, wherein the respective access behavior of the first memory (14) and of the second memory (10) is determined at least based on the following properties:
- memory access time,
- memory cycle time,
- latency time,
- data throughput.

5. Method according to one of claims 1 to 4, wherein the first memory (14) is provided as a volatile memory type, and the second memory (10) is provided as a volatile or non-volatile memory type.

6. Method according to one of claims 1 to 5, wherein the second memory (10) is provided as a remote memory via network by one or multiple remote computer systems.

7. Method according to one of claims 1 to 6, wherein access to the main memory (1) occurs byte by byte or word by word.

8. Computer system, including a main memory (1), wherein the main memory (1) comprises at least one first memory (14) according to a first memory type (2) and a second memory (10) according to a second memory type (3), wherein, for an access to the main memory (1), a choice between the first memory (14) and the second memory (10) is configured in such a manner, that by means of the choice, access to the first memory (10) and access to the second memory (10) are distinguishable depending upon the respective access behavior of the first memory (14) and of the second memory (10),
**characterized in that**
the choice is implemented in an application program (6) at a user level (5) within a computer system architecture, and the user level (5) is different from an operating system level (4) of the computer system architecture, and
wherein the application program (6) is configured, by means of the choice, to decide in advance to which memory (10, 14) of the main memory (1) it would like to access.

9. Computer system according to claim 8, wherein, in the application program (6), at least two program interfaces (13a, 13b) are implemented for access to the main memory (1), and, via the first program interface (13a), the first memory (14) can be addressed and, via the second program interface (13b), the second memory (10) can be addressed.

10. Computer system according to claim 8 or 9, which is configured to carry out a method according to one of the claims 1 to 7.

11. Computer program product, which is configured to be executed on a computer system and, when executed, conducts a method according to one of the claims 1 to 7.

## Revendications

1. Procédé destiné à l'accès amélioré à une mémoire principale (1) d'un système informatique,
- une mémoire principale (1) constituée d'au moins une première mémoire (14) selon un premier type de mémoire (2) et d'une deuxième mémoire (10) selon un deuxième type de mémoire (3) étant fournie, et
- une possibilité de sélection entre la première mémoire (14) et la deuxième mémoire (10) étant fournie pour un accès à la mémoire principale (1), et
- une distinction entre un accès à la première mémoire (14) et un accès à la deuxième mémoire (10) étant réalisée au moyen de la possibilité de sélection en fonction du comportement d'accès respectif de la première mémoire (14) et de la deuxième mémoire (10), **caractérisé en ce que**
- la possibilité de sélection est réalisée dans un programme d'application (6) en cours sur un niveau utilisateur (5) situé à l'intérieur d'une architecture de système informatique, et **en ce que** le niveau utilisateur (5) se distingue d'un niveau du système d'exploitation (4) de l'architecture de système informatique, et
- le programme d'application (6) décidant au préalable au moyen de la possibilité de sélection à quelle mémoire (10, 14) de la mémoire principale (1) il souhaite accéder.

2. Procédé selon la revendication 1, au moins deux interfaces de programme (13a, 13b) étant prévues dans le programme d'application (6), et la première mémoire (14) étant adressée par l'intermédiaire de la première interface de programme (13a) et la deuxième mémoire (10) étant adressée par l'intermédiaire de la deuxième interface de programme (13b).

3. Procédé selon la revendication 1 ou 2, des données de programme (11) du programme d'application (6) en cours dans le système informatique étant mémorisées soit dans la première mémoire (14) soit dans la deuxième mémoire (10) au moyen de la possibilité de sélection en fonction du comportement d'accès respectif de la première mémoire (14) et de la deuxième mémoire (10) et/ou en fonction de la fréquence d'accès aux données de programme (11) respectives.

4. Procédé selon l'une quelconque des revendications 1 à 3, le comportement d'accès respectif de la première mémoire (14) et de la deuxième mémoire (10) étant déterminé au moins à l'aide des caractéristiques suivantes :
- temps d'accès à la mémoire,
- durée du cycle de la mémoire,
- temps de latence,
- débit des données.

5. Procédé selon l'une quelconque des revendications 1 à 4, la première mémoire (14) étant fournie en tant que type de mémoire volatile et la deuxième mémoire (10) étant fournie en tant que type de mémoire volatile ou non volatile.

6. Procédé selon l'une quelconque des revendications 1 à 5, la deuxième mémoire (10) étant fournie en tant que mémoire éloignée par un ou plusieurs systèmes informatiques éloignés par l'intermédiaire du réseau.

7. Procédé selon l'une quelconque des revendications 1 à 6, un accès à la mémoire principale (1) étant réalisé par octet ou par mot.

8. Système informatique comprenant une mémoire principale (1), la mémoire principale (1) présentant au moins une première mémoire (14) suivant un premier type de mémoire (2) et une deuxième mémoire (10) suivant un deuxième type de mémoire (3), une possibilité de sélection entre la première mémoire (14) et la deuxième mémoire (10) étant configurée pour un accès à la mémoire principale (1) de manière à ce qu'au moyen de la possibilité de sélection, un accès à la première mémoire (14) et un accès à la deuxième mémoire (10) puissent être distingués en fonction du comportement d'accès respectif de la première mémoire (14) et de la deuxième mémoire (10),
**caractérisé en ce que**
la possibilité de sélection est réalisée dans un programme d'application (6) sur un niveau utilisateur (5) situé à l'intérieur d'une architecture de système informatique, et **en ce que** le niveau utilisateur (5) se distingue d'un niveau du système d'exploitation (4) de l'architecture de système informatique, et
le programme d'application (6) étant configuré, au moyen de la possibilité de sélection, pour décider au préalable à quelle mémoire (10, 14) de la mémoire principale (1) il souhaite accéder.

9. Système informatique selon la revendication 8, au moins deux interfaces de programme (13a, 13b) étant implémentées dans le programme d'application (6) pour l'accès à la mémoire principale (1), et la première mémoire (14) étant adressable par l'intermédiaire de la première interface de programme (13a) et la deuxième mémoire (10) étant adressable par l'intermédiaire de la deuxième interface de programme (13b).

10. Système informatique selon la revendication 8 ou 9, lequel est configuré pour réaliser un procédé selon l'une quelconque des revendications 1 à 7.

11. Produit de programme informatique qui est configuré pour être exécuté sur un système informatique et lors de l'exécution duquel un procédé selon l'une quelconque des revendications 1 à 7 est réalisé.
